# FASCICULE DE BREVET EUROPEEN

(11) **EP 0 706 341 B1**
(45) Date de publication et mention de la délivrance du brevet: **11.03.1998**
(21) Numéro de dépôt: 94920497.8
(22) Date de dépôt: 21.06.1994
(51) Int. Cl.: A47J 31/057

(54) **MACHINE A INFUSION**
BRÜHGETRÄNKEMASCHINE
BREWING APPARATUS

(30) Priorité: 30.06.1993 FR 9308016
(43) Date de publication de la demande: 17.04.1996
(73) Titulaire: MOULINEX S.A., 75008 Paris (FR)
(72) Inventeur: JOUATEL, Christian Bernard, F-61250 Radon (FR); LANDAIS, Francis Pierre Jacques, décédé (FR)
(74) Mandataire: Busquets, Jean-Pierre
(86) Numéro de dépôt international: FR9400749
(87) Numéro de publication internationale: WO9501118

(56) Documents cités:
- DE-A- 4 038 210
- FR-A- 1 120 194
- GB-A- 1 009 825
- US-A- 4 386 556
- US-A- 4 875 408
- US-A- 5 219 394

## Description

L'invention concerne une machine à infusion comportant un boîtier et un récipient collecteur d'infusion délimité par une paroi latérale et une paroi de fond, susceptible d'être placé sous l'orifice de sortie d'un filtre agencé dans ledit boîtier, ledit récipient collecteur comprenant une poignée, un bec par lequel l'infusion est versée hors du récipient et un couvercle présentant une ouverture par laquelle l'infusion s'écoule dans le récipient et qui est située en regard du bec, tandis que l'orifice de sortie du filtre est agencé de manière à surplomber ledit bec dans une position d'infusion ; ladite machine comportant en outre un moyen d'indexation adapté à positionner le bec en regard de l'orifice de sortie du filtre dans la position d'infusion.

D'après le document US-A-5219394, on connaît une machine à infusion de ce genre dans laquelle le moyen d'indexation du récipient collecteur est constitué par un évidement ménagé en bordure du boîtier de la machine et propre à recevoir le bec du récipient collecteur. Toute-fois, l'évidement du boîtier est difficilement visible par l'utilisateur lors de la mise en place du récipient collecteur, de sorte que l'utilisateur est soumis à une contrainte de visée pour positionner correctement le bec du récipient sous l'orifice de sortie du filtre, ce qui complique notablement cette opération de positionnement correct du récipient collecteur.

L'invention a pour but de remédier à ces inconvénients et de réaliser une machine à infusion, du type exposé ci-dessus, dans laquelle le moyen d'indexation permette notamment de faciliter grandement le positionnement correct du récipient collecteur.

Selon l'invention, le boîtier comprenant un socle sur lequel repose le récipient collecteur dans la position d'infusion et la poignée dudit récipient étant fixée à la paroi latérale de celui-ci par des moyens d'attache, le moyen d'indexation comporte un logement réalisé dans le boîtier et dans lequel une partie de la poignée du récipient collecteur s'encastre lorsque ledit récipient est positionné sur le socle.

Ainsi, cette indexation particulière du récipient collecteur par encastrement d'une partie de sa poignée dans le logement du boîtier permet, d'une part, de réaliser en aveugle, donc sans contrainte de visée contrairement à l'art antérieur, le positionnement correct du bec du récipient sous l'orifice de sortie du filtre lorsque le récipient est placé sur le socle du boîtier, et d'autre part, de préserver intégralement la chaleur au sein même du boitier de manière à conserver une bonne température de l'infusion.

Selon une autre caractéristique de l'invention, le récipient collecteur d'infusion comporte une grille positionnée à proximité du bec, et destinée à obturer l'ouverture située en regard du bec à la fin du passage de l'infusion.

Grâce à un tel récipient collecteur d'infusion, la plus grande partie de l'arôme de l'infusion est conservée à l'intérieur du récipient sans utilisation de joint d'étanchéité. D'autre part, la diminution du nombre d'ouvertures à la périphérie supérieure du récipient collecteur d'infusion limite les pertes de chaleur améliorant ainsi la température de l'infusion.

De plus, du fait de l'herméticité du récipient, l'air ne s'infiltre pas à l'intérieur du récipient, n'entraînant donc aucune oxydation de l'infusion, et la vapeur d'eau formée à l'intérieur du récipient ne s'échappe, plus empêchant ainsi toute caramélisation de l'infusion.

Les caractéristiques et avantages de l'invention ressortiront d'ailleurs de la description qui va suivre, prise à titre d'exemple non limitatif, en référence aux dessins annexés dans lesquels :
- la figure 1 est une vue schématique d'une machine à infusion dans laquelle est positionnée un récipient collecteur d'infusion selon l'invention,
- la figure 2 est une vue en coupe verticale à échelle agrandie du récipient collecteur d'infusion de la figure 1.

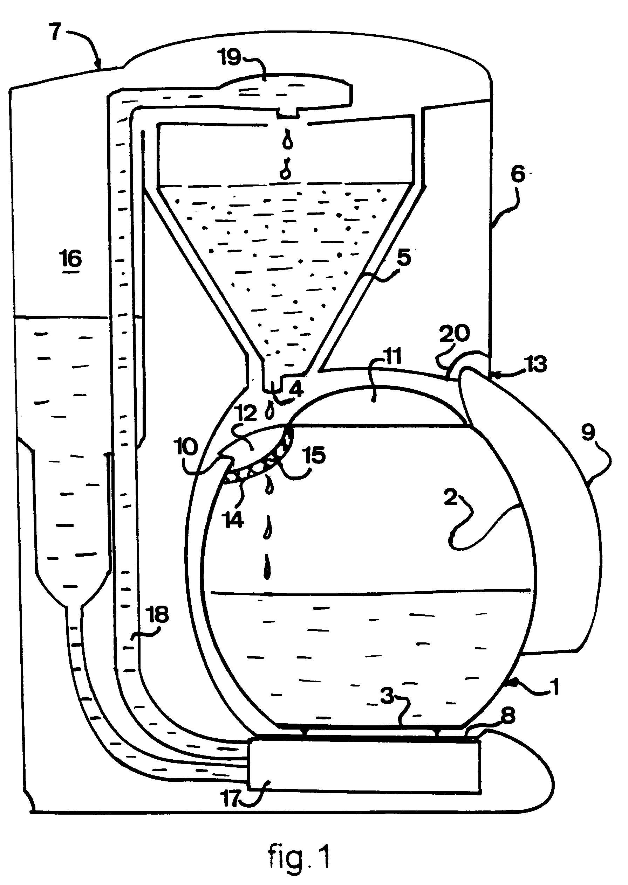

Selon la figure 1, une machine à infusion 7 telle par exemple une cafetière du type goutte-à-goutte comprend, dans un boîtier 6, un réservoir d'eau froide 16 ainsi qu'un chauffe-eau 17 alimenté par ce réservoir 16 et alimentant lui-même, par un tube 18 d'eau chaude ascendant, une goulotte d'arrosage 19 destinée à arroser un filtre amovible 5 connu en soi, agencé dans ledit boîtier 6 et destiné à recevoir de la mouture de café.

Le filtre 5 présente un orifice de sortie 4 en dessous duquel est placé un récipient collecteur d'infusion 1 reposant sur un socle 8 de ladite machine à infusion 7.

Le récipient collecteur d'infusion 1 est délimité par une paroi latérale 2 et une paroi de fond 3. Ledit récipient 1 comprend une poignée 9 fixée sur la paroi latérale 2 par des moyens d'attache, un bec 10 par lequel l'infusion est susceptible d'être versée hors du récipient 1 et un couvercle 11 présentant une ouverture 12 par laquelle l'infusion s'écoule dans ledit récipient collecteur 1.

Dans notre exemple de réalisation, le couvercle 11 est fixé sur la poignée 9.

Selon l'invention, l'ouverture 12 est située en regard du bec 10 et l'orifice de sortie 4 du filtre 5 est agencé de manière à surplomber ledit bec 10 dans une position d'infusion.

Le récipient collecteur d'infusion 1 comporte un moyen d'indexation 13 adapté à positionner le bec 10 en regard de l'orifice de sortie 4 du filtre 5 dans la position d'infusion. Ledit moyen d'indexation 13 comporte un logement 20 réalisé dans le boîtier 6 et dans lequel une partie de la poignée 9 du récipient 1 s'encastre lorsque le récipient 1 est positionné sur le socle 8.

La paroi latérale 2 du récipient collecteur d'infusion 1 présente une forme sphérique ainsi que le couvercle 11 fermant partiellement le récipient 1. Le récipient collecteur d'infusion 1 comporte une grille 14 positionnée à proximité du bec 10 et destinée à obturer l'ouverture 12 du couvercle 11 à la fin du passage de l'infusion, ladite grille 14 étant fixée, par exemple par collage, sur la paroi latérale 2 dudit récipient 1.

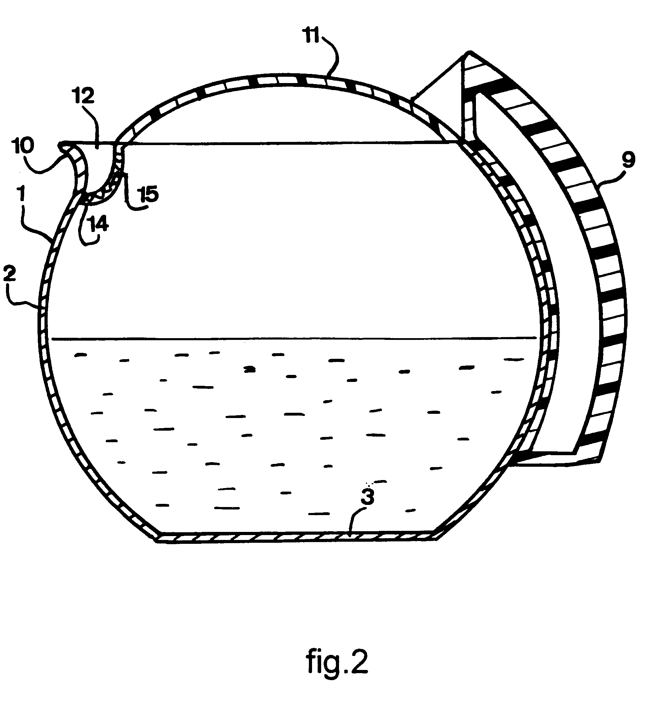

Selon la figure 2, où les mêmes références désignant les mêmes éléments que ceux illustrés à la figure 1, la grille 14 du récipient collecteur d'infusion 1 présente plusieurs trous 15 dont les dimensions sont déterminées de manière à, soit autoriser le libre écoulement de l'infusion au travers desdits trous 15, soit à présenter dans une phase finale de l'écoulement une résistance au passage de l'infusion à travers lesdits trous 15 provoquée par un effet d'attachement de l'infusion au bord des trous 15, créant ainsi un joint liquide fermant automatiquement chaque trou 15.

Le fonctionnement d'un tel récipient selon l'invention va maintenant être expliqué plus en détail.

Lors de la mise en fonctionnement de la cafetière, après quelques minutes de chauffage, l'eau chaude arrose la mouture de café présente dans le filtre et la fait gonfler de manière progressive. L'infusion ainsi obtenue sort par l'orifice de sortie 4 du filtre 5 et s'écoule par l'unique ouverture 12 dans le récipient collecteur d'infusion 1 au travers de la grille 14. Lorsque l'écoulement de l'infusion vient à s'arrêter, c'est-à-dire arrive en phase finale de l'infusion, une pellicule de liquide s'attache à la grille pour former sur les trous 15 un joint liquide. Ainsi, on obtient une fermeture totale du récipient collecteur d'infusion 1 qui préserve ainsi l'arôme et la température de l'infusion contenue dans le récipient 1.

Grâce, au moyen d'indexation 13, l'usager peut poser en aveugle le récipient collecteur d'infusion 1 sur le socle 8 et obtenir automatiquement le bon positionnement du bec 10 et donc de l'ouverture 12 sous l'orifice de sortie 4 du filtre 5. Cette disposition offre également un autre avantage technique puisque l'écoulement de l'infusion s'effectuant à l'intérieur du boîtier 6 de la cafetière 7, la chaleur est pratiquement enfermée dans le boîtier 6.

D'autre part, cette cafetière est esthétique puisque les parties nécessaires à l'écoulement et au recueillement de l'infusion sont cachées au plus profond du boîtier.

## Revendications

1. Machine à infusion comportant un boîtier (6) et un récipient collecteur d'infusion (1) délimité par une paroi latérale (2) et une paroi de fond (3), susceptible d'être placé sous l'orifice de sortie (4) d'un filtre (5) agencé dans ledit boîtier (6), ledit récipient collecteur (1) comprenant une poignée (9), un bec (10) par lequel l'infusion est versée hors du récipient (1) et un couvercle (11) présentant une ouverture (12) par laquelle l'infusion s'écoule dans le récipient et qui est située en regard du bec (10), tandis que l'orifice de sortie (4) du filtre (5) est agencé de manière à surplomber ledit bec (10) dans une position d'infusion ; ladite machine comportant en outre un moyen d'indexation (13) adapté à positionner le bec (10) en regard de l'orifice de sortie (4) du filtre (5) dans la position d'infusion,
**caractérisée en ce que**, le boîtier (6) comprenant un socle (8) sur lequel repose le récipient collecteur (1) dans la position d'infusion et la poignée (9) dudit récipient (1) étant fixée à la paroi latérale (2) de celui-ci par des moyens d'attache, le moyen d'indexation (13) comporte un logement (20) réalisé dans le boîtier (6) et dans lequel une partie de la poignée (9) du récipient collecteur (1) s'encastre lorsque ledit récipient (1) est positionné sur le socle (8).

2. Machine à infusion selon la revendication 1,
**caractérisée en ce que** le récipient collecteur (1) comporte une grille (14) positionnée à proximité du bec (10) et destinée à obturer l'ouverture (12) située en regard du bec (10) à la fin du passage de l'infusion.

3. Machine à infusion selon la revendication 2,
**caractérisée en ce que** la grille (14) est fixée par collage sur la paroi latérale (2) du récipient collecteur (1).

4. Machine à infusion selon la revendication 2,
**caractérisée en ce que** la grille (14) présente plusieurs trous (15) dont les dimensions sont déterminées de manière à, soit autoriser le libre écoulement de l'infusion au travers desdits trous (15), soit à présenter dans une phase finale de l'écoulement une résistance au passage de l'infusion à travers lesdits trous (15) provoquée par un effet d'attachement de l'infusion au bord des trous (15), créant ainsi un joint liquide fermant automatiquement chaque trou (15).

5. Machine à infusion selon l'une quelconque des revendications précédentes,
**caractérisée en ce que** la paroi latérale (2) du récipient collecteur (1) présentant une forme sphérique, le couvercle (11) dudit récipient présente également une forme sphérique.

## Claims

1. Brewing apparatus comprising a housing (6) and a brew collecting container (1), delimited by a side wall (2) and a bottom wall (3), that can be placed under the outlet (4) of a filter (5) arranged in said housing (6), said collecting container (1) comprising a handle (9), a spout (10) by which the brew is poured out of the container (1) and a lid (11) having an opening (12) through which the brew flows into the container and which is located in alignment with the spout (10), whilst the outlet (4) of the filter (5) is arranged so as to overlay said spout (10) in a brewing position ; said apparatus also comprising a locating means (13) adapted to position the spout (10) in alignment with the outlet (4) of the filter (5) in the brewing position,
**characterised in that** the housing (6) comprising a base (8) on which the collecting container (1) rests in the brewing position and the handle (9) of said container (1) being fixed to the side wall (2) thereof by attachment means, the locating means (13) comprises a recess (20) which is produced in the housing (6) and in which a part of the handle (9) of the collecting container (1) nests when said container (1) is positioned on the base (8).

2. Brewing apparatus according to claim 1,
**characterised in that** the collecting container (1) comprises a grate (14) positioned close to the spout (10) and intended to close the opening (12) located in alignment with the spout (10) at the end of the passage of the brew.

3. Brewing apparatus according to claim 2,
**characterised in that** the grate (14) is fixed to the side wall (2) of the collecting container (1) by means of adhesive bonding.

4. Brewing apparatus according to claim 2,
**characterised in that** the grate (14) has several holes (15) whose dimensions are determined so as either to allow the free flow of the brew through said holes (15) or to offer, in a final phase of the flow, a resistance to the passage of the brew through said holes (15) caused by an effect of clinging of the brew to the edge of the holes (15), thus creating a liquid seal automatically closing each hole (15).

5. Brewing apparatus according to any one of the preceding claims,
**characterised in that**, the side wall (2) of the collecting container (1) having a spherical shape, the lid (11) of said container also has a spherical shape.

## Patentansprüche

1. Brühgetränkemaschine mit einem Gehäuse (6) und einer Brühgetränke-Kanne (1), die durch eine Seitenwand (2) und einen Boden (3) begrenzt ist und unter die Ausflußöffnung (4) eines im Gehäuse (6) angeordneten Filters (5) gestellt wird, wobei die Kanne (1) einen Griff (9), eine Tülle (10), aus welcher das Brühgetränk aus der Kanne (1) gegossen wird, und einen Deckel (11) mit einer Öffnung (12) aufweist, durch welche das Brühgetränk in die Kanne fließt und die gegenüber der Tülle (10) angeordnet ist, wohingegen die Ausflußöffnung (4) des Filters (5) so angeordnet ist, daß sie sich in einer Aufgußstellung über der Tülle (10) befindet; die Maschine weist außerdem ein Anschlagelement (13) auf, welches die Tülle (10) in die Aufgußstellung gegenüber der Ausflußöffnung (4) des Filters (5) bringt, **dadurch gekennzeichnet, daß** das Gehäuse (6) einen Sockel (8) aufweist, auf welchem die Kanne (1) in der Aufgußstellung ruht, der Griff (9) der Kanne (1) an deren Seitenwand (2) mittels Befestigungselemente befestigt ist und das Anschlagelement (13) eine im Gehäuse (6) ausgebildete Mulde (20) aufweist, welche einen Teil des Griffs (9) der Kanne (1) aufnimmt, wenn die Kanne (1) auf den Sockel (8) gestellt wird.

2. Brühgetränkemaschine nach Anspruch 1, **dadurch gekennzeichnet, daß** die Kanne (1) nahe der Tülle (10) ein Lochelement (14) aufweist, das dazu dient, die gegenüber der Tülle (10) gelegene Öffnung (12) am Ende des Durchfließens des Brühgetränks zu verschließen.

3. Brühgetränkemaschine nach Anspruch 2, **dadurch gekennzeichnet, daß** das Lochelement (14) durch Ankleben an der Seitenwand (2) der Kanne (1) befestigt ist.

4. Brühgetränkemaschine nach Anspruch 2, **dadurch gekennzeichnet, daß** das Lochelement (14) mehrere Löcher (15) aufweist, deren Größe so gewählt ist, daß sie sowohl den freien Durchfluß des Brühgetränks durch die Löcher (15) hindurch gewährleisten als auch in einer Endphase des Aufgießens einen Widerstand gegen den Durchfluß des Brühgetränks durch die Löcher (15) hindurch bilden, der dadurch entsteht, daß das Brühgetränk am Rand der Löcher (15) haftenbleibt und so eine flüssige Dichtung bildet, die automatisch jedes Loch (15) schließt.

5. Brühgetränkemaschine nach einem der vorhergehenden Ansprüche, **dadurch gekennzeichnet, daß** die Seitenwand (2) der Kanne (1) sowie der Deckel (11) der Kanne die Form einer Kugel aufweisen.
